Europäisches Patentamt

European Patent Office

Office européen des brevets

(11) Veröffentlichungsnummer: **0 008 814**
B1

(12) **EUROPÄISCHE PATENTSCHRIFT**

(45) Veröffentlichungstag der Patentschrift:
02.06.82

(51) Int. Cl.³: **F 16 C 13/00, D 21 G 1/02**

(21) Anmeldenummer: 79200389.9

(22) Anmeldetag: 12.07.79

(54) **Walze mit steuerbarer Durchbiegung, insbesondere für Maschinen zur Erzeugung und Verarbeitung von Bahnen aus Papier oder Kunststoff.**

(30) Priorität: 31.08.78 DE 2837913

(43) Veröffentlichungstag der Anmeldung:
19.03.80 Patentblatt 80/6

(45) Bekanntmachung des Hinweises auf die Patenterteilung:
02.06.82 Patentblatt 82/22

(84) Benannte Vertragsstaaten:
AT BE CH FR GB IT LU NL SE

(56) Entgegenhaltungen:
DE-A-2 655 894
FR-A-1 343 136
US-A-3 328 866

(73) Patentinhaber: ER-WE-PA Maschinenfabrik und Eisengiesserei Herbert Karl Schmidt, Mettmanner Strasse 49/51, D-4006 Erkrath (DE)

(72) Erfinder: Bolender, Walter, Rathelbeckerweg 21, D-4006 Erkrath (DE)
Erfinder: Wallner, Ernst, Otto-Hahn-Strasse 52, D-4018 Langenfeld (DE)

(74) Vertreter: Feder, Heinz, Dr. et al, Dominikanerstrasse 37, D-4000 Düsseldorf 11 (DE)

## Walze mit steuerbarer Durchbiegung, insbesondere für Maschinen zur Erzeugung und Verarbeitung von Bahnen aus Papier oder Kunststoff

Die Erfindung betrifft eine Walze mit steuerbarer Durchbiegung, insbesondere für Maschinen zur Erzeugung und Verarbeitung von Bahnen aus Papier oder Kunststoff.

Bahnen aus Papier oder Kunststoff werden bei ihrer Erzeugung oder Verarbeitung häufig zwischen zwei oder mehreren Walzen gepreßt. Im allgemeinen wird bei derartigen Preßvorgängen eine gleichmäßige Druckverteilung in den Berührungszonen der Walzen gefordert. Da die Walzen aber insbesondere bei größeren Arbeitsbreiten eine merkbare Durchbiegung aufgrund des Eigengewichtes und des hohen Anpreßdruckes aufweisen, ist der Druck an den Walzenenden höher als in der Walzenmitte. Dies führt zu unerwünschten Effekten bei der Herstellung und Verarbeitung der Bahnen.

Walzen mit steuerbarer Durchbiegung sind grundsätzlich bekannt. Sie besitzen im allgemeinen ein im wesentlichen zylindrisches Innenteil und ein rohrförmiges Außenteil, das sich über einen Teil der Länge des Innenteils erstreckend, dieses umgebend, um die Zylinderachse drehbar an seinen beiden Enden auf dem Innenteil gelagert ist. Zwischen Innenteil und Außenteil sind im allgemeinen Einrichtungen zur Erzeugung von in radialer Richtung zwischen Innenteil und Außenteil wirksamen Zwangskräften angeordnet (siehe US-A-3 328 866).

Bei einer bekannten Walze (DE-A-2 655 894) mit steuerbarer Durchbiegung ist das Außenteil auf dem Innenteil schwimmend gelagert, wobei der Raum zwischen Außenteil und Innenteil in mehrere, in Längsrichtung nebeneinander angeordnete Kammern aufgeteilt ist, welche eine Druckflüssigkeit enthalten, die unter erhöhten Druck gesetzt werden kann. Durch diesen erhöhten Druck soll sich insbesondere in der Mitte der Walze eine Aufwölbung ergeben, welche die durch das Eigengewicht der Walze hervorgerufene Durchbiegung ausgleicht. Diese bekannte Walze ist jedoch wegen der erforderlichen Zuleitungen und der Abdichtungsprobleme aufwendig konstruiert, und die Steuerbarkeit ihrer Durchbiegung ist relativ gering.

Bei einer anderen Ausführungsform dieser bekannten Walze mit steuerbarer Durchbiegung, die ebenfalls nach dem hydraulischen Prinzip arbeitet, sind am Innenteil längs einer Mantellinie mehrere Gleitschuhe angeordnet, auf denen sich das Außenteil direkt über einen Schmierfilm abstützt. Die Gleitschuhe können auf hydraulischem Weg in radialer Richtung nach außen gedrückt werden und erzeugen dadurch zwischen dem Innenteil und dem Außenteil die gewünschten zusätzlichen Zwangskräfte. Diese bekannte Walze ist ebenfalls außerordentlich aufwendig aufgebaut, weil jede einzelne Stützquelle über Druckleitungen an den Hydraulikkreis angeschlossen sein muß. Es ergeben sich erhebliche Abdichtungsprobleme und Schwierigkeiten bei der Montage und Wartung der Walze.

Es ist weiterhin eine Walze bekannt (FR-A-1 343 136), bei der nicht die Durchbiegung, sondern der Verlauf des Außendurchmessers der Walze, die sogenannte »Bombierung«, veränderbar ist. Hierzu ist der Innenraum der Walze in mehrere Kammern aufgeteilt, denen jeweils eine Heizflüssigkeit mit verschiedener Temperatur zugeführt werden kann. Infolge der unterschiedlichen Erwärmung der Walze in verschiedenen, in Längsrichtung der Walze nebeneinander angeordneten Bereichen, kann eine Veränderung des Walzendurchmessers über die Länge der Walze gesehen erreicht werden. Eine Steuerung der Durchbiegung ist mit dieser Einrichtung nicht möglich.

Die der Erfindung zugrunde liegende Aufgabe besteht darin, eine Walze mit steuerbarer Durchbiegung zu schaffen, die die einfach konstruiert, leicht montierbar und im Betrieb bei minimalem Verschleiß wartungsfreundlich ist.

Die Erfindung geht von der Grunderkenntnis aus, daß eine Durchbiegung eines langgestreckten Bauteils dadurch erhalten werden kann, daß das Bauteil an einer seiner Längsseiten erwärmt wird, während an der dieser gegenüberliegenden Längsseite die Temperatur konstant gehalten wird. Die Durchbiegung des Bauteils erfolgt dann aufgrund der einseitigen thermischen Ausdehnung in Längsrichtung.

Die Erfindung geht aus von einer Walze mit einem im wesentlichen zylindrischen Innenteil und einem rohrförmigen Außenteil, das sich über einen Teil der Länge des Innenteils, dieses umgebend und um die Zylinderachse drehbar an seinen beiden Enden auf dem Innenteil gelagert ist und bei der am Innenteil längs einer Mantellinie eine Einrichtung zur Erzeugung von in radialer Richtung zwischen Innenteil und Außenteil wirksamen Zwangskräften angeordnet ist. Die Lösung der obengenannten Aufgabe erfolgt erfindungsgemäß dadurch, daß auf dem Innenteil mindestens ein an einen elektrischen Heizkreis anschließbares Heizband angeordnet ist, welches sich mindestens über einen Teil der Länge des Innenteils und über einen vorgegebenen Umfangsbereich, der kleiner ist als 180°, erstreckt und daß im Innenteil mindestens zwei elektrische Temperaturfühler angeordnet sind, davon mindestens ein erster Temperaturfühler in unmittelbarer Nähe eines Heizbandes und mindestens ein zweiter Temperaturfühler an einer in Umfangsrichtung des Innenteils gesehen dem Heizband bzw. den Heizbändern abgewandten Seite des Innenteils und daß die jeweils ersten und zweiten Temperaturfühler paarweise an eine Vorrichtung zur Messung der Temperaturdifferenz angeschlossen sind und mindestens ein elektrischer Regelkreis vorgesehen ist, an den die Vorrichtung zur Messung der Temperaturdifferenz bzw. -differenzen sowie der Heizkreis bzw. die Heizkreise angeschlossen

2

sind und der die Beheizung des Heizbandes bzw. der Heizbänder so regelt, daß eine vorgegebene Temperaturdifferenz bzw. vorgegebene Temperaturdifferenzen zwischen der beheizten und der unbeheizten Seite des Innenteils eingehalten werden.

Wie weiter unten anhand eines Ausführungsbeispiels noch näher erläutert, wird durch die einseitige Beheizung des Innenteils eine Durchbiegung des Innenteils erreicht, die sich über die Lagerung des Außenteils auf dem Innenteil auf das Außenteil überträgt. Auf diese Weise ist es möglich, nicht nur die natürliche Durchbiegung der Walze auszugleichen, um einen gleichmäßigen Anpreßdruck zu erhalten, sondern es ist auch möglich, für bestimmte Zwecke eine zusätzliche Aufwölbung der Walzenoberfläche in bestimmten Bereichen zu erzielen.

Die Walze läßt sich sehr einfach konstruieren, da infolge der Abkehr vom hydraulischen Prinzip keine Abdichtungsprobleme auftreten.

Vorteilhafte Ausführungsformen des Gegenstandes der Erfindung ergeben sich mit den Merkmalen der Unteransprüche.

So ist insbesondere die Kühlung der den Heizbändern abgewandten Seite des Innenteils von Vorteil, wobei durch die aufgeführten Maßnahmen erreicht werden kann, daß jeweils mit konstanten steuerbaren Temperaturdifferenzen zwischen den beiden einander gegenüberliegenden Seiten des Innenteils gearbeitet werden kann.

Von besonderer Bedeutung ist die in Unteranspruch 6 aufgeführte Ausführungsform. Bei dieser Ausführungsform ist es möglich, für jede der Heizzonen eine andere Temperaturdifferenz vorzugeben, wodurch auf der Walzenoberfläche für bestimmte Zwecke eine Wellenform erzeugt werden kann. Durch die unabhängige Steuerung des Walzenprofils in verschiedenen Bereichen aufgrund der unterschiedlichen Heizzonen ist es besonders gut möglich, die erfindungsgemäße Walze zur Einstellung der Feuchtigkeit einer Papierbahn unmittelbar nach ihrer Herstellung auf der Papiermaschine einzusetzen. Hierzu wird die Feuchtigkeit der Papierbahn längs ihrer Breite an verschiedenen Stellen gemessen, wobei die gemessenen Werte dem die Durchbiegung der Walze steuernden elektrischen Regelkreis zugeführt werden. Überschreitet der Feuchtigkeitsgehalt in einem bestimmten Bereich der Papierbahn einen vorgegebenen Wert, so wird in der diesem Bereich entsprechenden Heizzone der Walze durch Erzeugung einer größeren Temperaturdifferenz zwischen der Ober- und Unterseite des Innenteils eine verstärkte Durchbiegung in Richtung auf die Bahn eingestellt, wodurch sich der Preßdruck in dieser Zone erhöht und damit der Feuchtigkeitsgehalt an dieser Stelle ausgeglichen werden kann. Es ist also bei dieser Ausführungsform eine gezielte Linienkrafteinstellung zur Korrektur des Querprofils der Walze möglich.

Beim Einsatz der erfindungsgemäßen Walze an Papiermaschinen ist mit geringem technischen Aufwand eine erhebliche Steigerung der Produktion und der Papierqualität möglich.

Eine weitere wichtige Anwendungsmöglichkeit der erfindungsgemäßen Walze ergibt sich bei ihrem Einsatz an Vorrichtungen zur Herstellung von Kunststoffolien gemäß den Merkmalen des Patentanspruchs 10.

Im folgenden werden anhand der Zeichnungen Ausführungsbeispiele für die erfindungsgemäße Walze näher erläutert.

Fig. 1 zeigt schematisiert im Längsschnitt eine Ausführungsform einer Walze mit steuerbarer Durchbiegung;

Fig. 2 ist ein Schnitt durch die Walze nach Fig. 1 nach der Linie II-II;

Fig. 3 zeigt in stark schematisierter Darstellung eine Ausführungsform der erfindungsgemäßen Walze in Anwendung bei einer Vorrichtung zur Herstellung von Kunststoffolien.

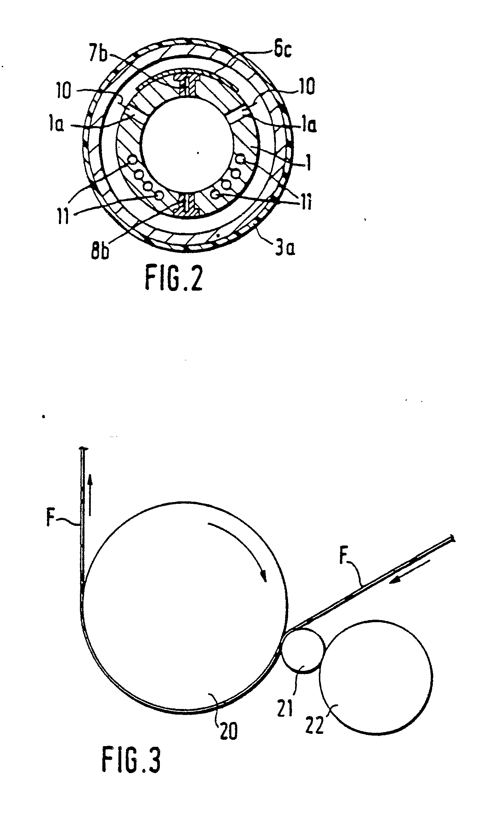

Die in den Fig. 1 und 2 dargestellte Walze mit steuerbarer Durchbiegung besitzt ein rohrförmiges Innenteil 1 mit Achszapfen 2a und 2b an beiden Enden. Auf dem Innenteil 1 stützt sich über insgesamt sieben Rollenlager 4a bis 4g das rohrförmige Außenteil 3 ab, auf dessen äußerer Oberfläche noch ein besonderer Walzenmantel 3a angeordnet sein kann.

Die Rollenlager 4a bis 4g sind Pendelrollenlager. Sie sind so angeordnet, daß die Abstände der beiden an den Enden angeordneten Rollenlager 4a und 4g von dem jeweils nächsten Rollenlager 4b bzw. 4f etwas größer sind als die Abstände der Rollenlager 4b, 4c, 4d, 4e, 4f untereinander, die gleich sind. Es hat sich gezeigt, daß bei dieser Abstandsverteilung der Rollenlager eine besonders gleichmäßige Verteilung der wirkenden Kräfte längs der Walze erreicht werden kann. An einem der beiden Enden ist das Außenteil 3 gegen das Innenteil 1 durch ein als Rillenkugellager ausgebildetes Axiallager 5a in Achsrichtung gehalten.

Auf der in den Figuren oberen Seite des Innenteils 1 sind jeweils zwischen den Rollenlagern 4a bis 4g in Längsrichtung Heizbänder 6a bis 6f angeordnet. Wie aus Fig. 2 ersichtlich, erstrecken sich diese Heizbänder in Umfangsrichtung des Innenteils über einen Winkel von ca. 90°. Die Heizbänder sind über Zuleitungen 10, von denen der Übersicht wegen nur eine dargestellt ist, jeweils an einen elektrischen Heizkreis 15 angeschlossen. Hierbei ist jeweils einem Paar von Heizbändern ein solcher Heizkreis 15 zugeordnet. Es werden dadurch durch die Heizbänder 6a und 6b eine Heizzone Z1, durch die Heizbänder 6c und 6d eine Heizzone Z2 und durch die Heizbänder 6e und 6f eine Heizzone Z3 geschaffen. Die elektrischen Zuleitungen der Heizkreise sind dabei innerhalb des Innenteils 1 und durch Bohrungen 1a nach außen geführt.

In der in den Fig. 1 und 2 unteren Hälfte des Innenteils 1 sind Kühlkanäle 11 angeordnet, die jeweils paarweise hintereinander geschaltet sind und die an eine Kühlmittelzuleitung KE und eine Kühlmittelableitung KA angeschlossen sind.

Weiterhin sind im Innenteil 1 an der den Heizbändern 6a bis 6f benachbarten Innenseite Bohrungen angeordnet, in denen sich Temperaturfühler 7a bis 7c befinden. Jeder der Temperaturfühler 7a bis 7c ist einer der Heizzonen Z1 bis Z3 zugeordnet. Weiterhin sind in der unteren Hälfte des Innenteils 1 an der Innenseite Bohrungen angeordnet, in denen sich jeweils ein Temperaturfühler 8a bis 8c befindet. Die Temperaturfühler 7a und 8a sind zusammen an eine Vorrichtung 17 zur Bestimmung von Temperaturdifferenzen angeschlossen, die ihrerseits mit einem Regler 14 verbunden ist, der seinerseits jeweils einen der Heizkreise 15 steuert. In gleicher Weise sind die Temperaturfühler 7b und 8b bzw. 7c und 8c mit nicht dargestellten Vorrichtungen zur Messung der Temperaturdifferenz verbunden, wobei über entsprechende Regler die Heizkreise der den Heizzonen Z2 und Z3 zugeordneten Heizbänder gesteuert werden. Schließlich befindet sich im Innenteil 1 noch ein weiterer Temperaturfühler 9, der an einen zusätzlichen Regler 16 angeschlossen ist. Der Regler 16 steuert ein Ventil 12 im Kühlmittelkreislauf der Walze.

Schließlich sind an den beiden Enden der Walze zwischen Außenteil 3 und Innenteil 1 Labyrinthdichtungen 13a und 13b angeordnet, um einen störenden Einfluß durch Konvektion zwischen der Luft im Raum zwischen Außenteil 3 und Innenteil 1 und der Außenluft zu verhindern.

Im Betrieb ist die in den Fig. 1 und 2 dargestellte Walze an den Achszapfen 2a und 2b fest eingespannt, so daß das Außenteil 3 um das feststehende Innenteil 1 drehbar ist. Die Walze kann beispielsweise in der in den Fig. 1 und 2 dargestellten Lage an einer Papiermaschine montiert sein, so daß die Heizbänder an der Oberseite des Innenteils liegen, während das Unterteil des Innenteils gekühlt wird. Aufgrund ihres Eigengewichtes biegt sich die Walze zunächst nach unten durch. Bei einem konkreten Ausführungsbeispiel mit einer Walze für eine Bahnbreite von 3600 mm, die für einen Liniendruck von 117,7 N/mm ausgelegt ist, beträgt die Durchbiegung in Walzenmitte ca. 1,6 mm. Um einen gleichmäßigen Anpreßdruck zu erreichen, muß diese Durchbiegung ausgeglichen werden. Es wird nun den Reglern 14 eine bestimmte Temperaturdifferenz zwischen den Temperaturfühlern 7a und 8a bzw. 7b und 8b, 7c, 8c vorgegeben. Über die Heizkreise 15 werden die Heizbänder 6a bis 6f so lange aufgeheizt, bis die vorgegebenen Temperaturdifferenzen erreicht sind. Die erforderlichen Temperaturdifferenzen müssen vorher durch entsprechende Versuche und/oder Berechnungen ermittelt werden. Infolge der einseitigen Erwärmung des Innenteils 1 wölbt sich dieses an der beheizten Seite nach außen, und diese Aufwölbung überträgt sich über die Rollenlager 4a bis 4g auf das Außenteil 3. Durch diese Aufwölbung wird die Durchbiegung ausgeglichen, und es hat sich gezeigt, daß bei der oben angegebenen Durchbiegung eine Temperaturdifferenz von 33,6°C zwischen der Ober- und Unterseite des Innenteils erforderlich ist, um die natürliche Durchbiegung auszugleichen und einen gleichmäßigen Anpreßdruck der Walze sicherzustellen. Bei größeren Temperaturdifferenzen wölbt sich die Oberseite der Walze konvex nach außen.

Die eingestellte Durchbiegung bleibt erhalten, solange die vorgegebene Temperaturdifferenz nicht geändert wird. Als Festpunkt für die Temperatur dient dabei die vom Temperaturfühler 9 gemessene Temperatur an der Unterseite des Innenteils 1. Ändert sich infolge der Wärmeleitung über das Innenteil 1 die Temperatur an der Unterseite, so wird über den Regler 16 und das Ventil 12 der Kühlwasserzustrom so lange geändert, bis sich auch hier eine vorgegebene Temperatur wieder einstellt.

Die in den Fig. 1 und 2 dargestellte Walze mit steuerbarer Durchbiegung kann aber auch in der Weise betrieben werden, daß für die Heizzonen Z1, Z2, Z3 jeweils verschiedene Temperaturdifferenzen vorgegeben werden. Aufgrund der sich dann einstellenden verschieden starken Aufwölbung kann eine bestimmte gewünschte Welligkeit der äußeren Walzenoberfläche erreicht werden.

Die Steuerung der Durchbiegung in den verschiedenen Zonen Z1, Z2 und Z3 kann, wie bereits erwähnt, in nicht dargestellter Weise dazu verwendet werden, bei einer Papiermaschine eine Steuerung des Anpreßdruckes in verschiedenen Bereichen der als Preßwalze eingesetzten Walze mit steuerbarer Durchbiegung in Abhängigkeit von dem an der Papierbahn in bestimmten Bereichen gemessenen Feuchtigkeitsgehalt durchzuführen.

Hierzu muß lediglich der Regler 14 in der Weise erweitert werden, daß die an ihm einstellbare vorzugebende Temperaturdifferenz mittels einer Zusatzvorrichtung in Abhängigkeit von einem vorgegebenen Feuchtigkeitsgehalt veränderbar ist. Der von einem Feuchtigkeitsmesser angezeigte, tatsächliche Feuchtigkeitsgehalt der Papierbahn wird dann jeweils mit dem eingestellten Wert verglichen und die Durchbiegung der Walze über die Regler 14 entsprechend so nachgeregelt, daß bei zu hohem Feuchtigkeitsgehalt sich der Anpreßdruck in dem betreffenden Bereich vergrößert.

In Fig. 3 ist eine weitere Anwendungsmöglichkeit der erfindungsgemäßen Walze mit steuerbarer Durchbiegung dargestellt.

Bei Vorrichtungen zur Erzeugung von Kunststoffolien, sogenannten Filmgießanlagen, wird der Kunststoffilm einem Kühlzylinder zugeführt, an den er mittels einer Anpreßwalze angepreßt wird. Hierbei soll der Durchmesser der Anpreßwalze wesentlich kleiner sein als der Durchmesser des Kühlzylinders, um einen möglichst schmalen Anpreßbereich zu erhalten. Infolge des geringen Durchmessers der Anpreßwalze besitzt diese aber, vor allem bei größeren Arbeitsbreiten, eine besonders starke Durchbiegung aufgrund des Eigengewichtes. Aus diesem Grund ist bei bekannten Anlagen parallel zur Längsachse der Anpreßwalze noch eine Abstützwalze größeren Durchmessers angeordnet. Die Durchbiegung der Anpreßwalze läßt sich aber durch diese Abstützwalze nur zum Teil ausgleichen, da die Abstützwalze selbst ebenfalls eine Durchbiegung aufgrund des Eigengewichtes aufweist.

In Fig. 3 ist schematisch der Kühlzylinder 20 einer im übrigen nicht dargestellten Vorrichtung zur Herstellung von Kunststoffolien dargestellt. Der Kunststoffilm F wird mittels der Anpreßwalze 21 an den Kühlzylinder 20 angedrückt. Parallel zur Längsachse der Anpreßwalze 21 ist eine Abstützwalze 22 angeordnet. Diese Abstützwalze 22 ist nun als Walze mit steuerbarer Durchbiegung, beispielsweise in einer Ausführungsform, wie sie anhand der Fig. 1 und 2 beschrieben wurde, ausgebildet. Infolge der exakten Steuermöglichkeit der Durchbiegung der Abstützwalze 22 läßt sich auch die Durchbiegung der Anpreßwalze 21 vollständig ausgleichen.

## Patentansprüche

1. Walze mit steuerbarer Durchbiegung, insbesondere für Maschinen zur Erzeugung und Verarbeitung von Bahnen aus Papier oder Kunststoff mit einem im wesentlichen zylindrischen Innenteil und einem rohrförmigen Außenteil, das sich über einen Teil der Länge des Innenteils erstreckend, dieses umgebend und um die Zylinderachse drehbar an seinen beiden Enden auf dem Innenteil gelagert ist und bei der am Innenteil längs einer Mantellinie eine Einrichtung zur Erzeugung von in radialer Richtung zwischen Innenteil und Außenteil wirksamen Zwangskräften angeordnet ist, dadurch gekennzeichnet, daß auf dem Innenteil (1) mindestens ein an einen elektrischen Heizkreis (15) anschließbares Heizband (6a bis 6f) angeordnet ist, welches sich mindestens über einen Teil der Länge des Innenteils (1) und über einen vorgegebenen Umfangsbereich, der kleiner ist als 180°, erstreckt und daß im Innenteil (1) mindestens zwei elektrische Temperaturfühler (7a bis 7c; 8a bis 8c) angeordnet sind, davon mindestens ein erster Temperaturfühler (7a bis 7c) in unmittelbarer Nähe eines Heizbandes und mindestens ein zweiter Temperaturfühler (8a bis 8c) an einer in Umfangsrichtung des Innenteils (1) gesehen dem Heizband (15) bzw. den Heizbändern abgewandten Seite des Innenteils und daß die jeweils ersten und zweiten Temperaturfühler (7a bis 7c bzw. 8a bis 8c) paarweise an eine Vorrichtung (17) zur Messung der Temperaturdifferenz angeschlossen sind und mindestens ein elektrischer Regelkreis (14) vorgesehen ist, an den die Vorrichtung (17) zur Messung der Temperaturdifferenz bzw. -differenzen, sowie der Heizkreis (15) bzw. die Heizkreise angeschlossen sind und der die Beheizung des Heizbandes bzw. der Heizbänder (6a bis 6f) so regelt, daß eine vorgegebene Temperaturdifferenz bzw. vorgegebene Temperaturdifferenzen zwischen der beheizten und der unbeheizten Seite des Innenteils (1) eingehalten werden.

2. Walze nach Anspruch 1, dadurch gekennzeichnet, daß im Innenteil (1) an der dem Heizband bzw. den Heizbändern (6a bis 6f) abgewandten Seite eine Kühleinrichtung (11) angeordnet ist.

3. Walze nach Anspruch 2, dadurch gekennzeichnet, daß die Kühleinrichtung mindestens einen in das Innenteil (1) eingearbeiteten Kühlkanal (11) aufweist, der an einen Kühlmittelkreislauf angeschlossen ist.

4. Walze nach Anspruch 3, dadurch gekennzeichnet, daß mehrere in Längsrichtung verlaufende Kühlkanäle (11) vorhanden sind, die paarweise so hintereinandergeschaltet sind, daß sich Kühlmitteleinlauf (KE) und Kühlmittelauslauf (KA) am gleichen Ende der Walze befinden.

5. Walze nach einem der Ansprüche 2 bis 4, dadurch gekennzeichnet, daß im Innenteil (1) in der Nähe der Kühleinrichtung bzw. der Kühlkanäle (11) ein zusätzlicher elektrischer Temperaturfühler (9) angeordnet ist, der mit einem zusätzlichen Regelkreis (16) verbunden ist, welcher die Kühlmittelzufuhr entsprechend einer vorgegebenen Temperatur regelt.

6. Walze nach einem der Ansprüche 1 bis 5, dadurch gekennzeichnet, daß sich das Außenteil (3) über mehrere Rollenlager (4a bis 4g) auf dem Innenteil (1) abstützt und jeweils zwischen zwei Rollenlagern ein Heizband (6a bis 6f) angeordnet ist, wobei jeweils zwei benachbarte Heizbänder eine Heizzone (Z1 bis Z3) bilden und an einen gemeinsamen Heizkreis (15) angeschlossen sind und einem gemeinsamen ersten Temperaturfühler und einem gemeinsamen zweiten Temperaturfühler zugeordnet sind und jeder Heizzone (Z1 bis Z3) ein eigener elektrischer Regelkreis (14) zugeordnet ist.

7. Walze nach einem der Ansprüche 1 bis 6, dadurch gekennzeichnet, daß das Außenteil (3) auf dem Innenteil (1) an einem Ende über ein Axiallager (5a) gehaltert ist.

8. Walze nach einem der Ansprüche 1 bis 7, dadurch gekennzeichnet, daß an den Enden der Walze zwischen Außenteil (3) und Innenteil (1) Labyrinthdichtungen (13a, 13b) angeordnet sind.

9. Walze nach einem der Ansprüche 6 bis 8, dadurch gekennzeichnet, daß mindestens fünf Rollenlager (4a bis 4g) vorhanden sind, von denen zwei an den beiden Enden und eines in der Mitte der Walze angeordnet sind, der Abstand der beiden äußeren Rollenlager (4a und 4g) von den ihnen jeweils nächstliegenden Rollenlagern (4b, 4f) größer ist als der Abstand der übrigen Rollenlager (4c, 4d, 4e) untereinander.

10. Anwendung einer Walze nach einem der Ansprüche 1 bis 9 an einer Vorrichtung zur Herstellung von Kunststoffolien mit einem rotierenden Kühlzylinder, einer Anpreßwalze, deren Durchmesser wesentlich kleiner ist als der Durchmesser des Kühlzylinders, einer parallel zur Längsachse der Anpreßwalze angeordneten, die Anpreßwalze längs einer Mantellinie berührenden Abstützwalze, dadurch gekennzeichnet, daß die Abstützwalze (22) als Walze mit steuerbarer Durchbiegung nach einem der Ansprüche 1 bis 9 ausgebildet ist.

**Claims**

1. A controlled-deflection roll, especially for use in machines for making and processing webs of paper or synthetic materials, said roll comprising a substantially cylindrical inner part and a tubular outer part which extends over and surrounds part of the length of said inner part, and which, at both ends, is mounted for rotation about the axis of the latter, said inner part of said roll comprising a device for creating radially directed forces between said inner and outer parts along a generating line of the latter, characterized in that at least one heater band (6a to 6f) adapted to be connected to an electrical heating circuit (15), is arranged upon said inner part (1), said heating band or bands (6a to 6f) extending over at least part of the length of said inner part and over a predetermined circumferential area of less than 180°, that, within said inner part (1), at least two electrical temperature sensors (7a to 7c; 8a to 8c) are arranged, at least a first one of them being positioned in the near vicinity of a heater band, and at least a second one of them being positioned within said inner part (1) diametrically opposite to said heater band or bands (6a to 6f), respectively, and that each of said first and second temperature sensors (7a to 7c; 8a to 8c) are connected, in pairs, to a device (17) for measuring the difference in temperature, whereby at least one electric control circuit (14) is provided to which said device (17) for measuring the difference or differences in temperature as well as said heating circuit (15) or circuits are connected, said control circuit (14) regulating the heating-up of said heater band or bands (6a to 6f) in such a way that a predetermined difference of differences in temperature are maintained between the heated side and the unheated side of said inner part (1) of said roll.

2. A roll as claimed in claim 1, characterized in that, within the inner part (1), a cooling device (11) is arranged on the side remote from the heater band or bands (6a to 6f).

3. A roll as claimed in claim 2, characterized in that the cooling device comprises at least one cooling duct (11) machined into the inner part (1) and connected to a coolant circuit.

4. A roll as claimed in claim 3, characterized in that a plurality of cooling ducts (11) extending in longitudinal direction are provided, which ducts (11) are serially connected in pairs in such a way the coolant inlet (KE) and the coolant outlet (KA) are located at the same end of said roll.

5. A roll as claimed in one of claims 2 to 4, characterized in that, within the inner part (1) and in the vicinity of the cooling device or the cooling ducts (11), respectively, an additional electrical temperature sensor (9) is arranged, said additional temperature sensor (9) being connected to an additional control circuit (16) for regulating the coolant supply in accordance with a predetermined temperature.

6. A roll as claimed in one of claims 1 to 5, characterized in that the outer part (3) is supported on the inner part (1) by a plurality of roller bearings (4a to 4g), one of the heater bands (6a to 6f) each being positioned between two roller bearings, whereby two adjacent heater bands form a heating zone (Z1 to Z3) connected to a common heating circuit (15) and associated with a common first temperature sensor and a common second temperature sensor, and whereby an own electric control circuit (14) is associated with each of said heating zones (Z1 to Z3).

7. A roll as claimed in one of claims 1 to 6, characterized in that the outer part (3), at one end, is held in position relative to the inner part (1) by means of an axial thrust bearing (5a).

8. A roll as claimed in one of claims 1 to 7, characterized in that, at the ends of said roll, labyrinth glands (13a, 13b) are provided between the outer part (3) and the inner part (1).

9. A roll as claimed in one of claims 6 to 8, characterized in that at least five roller bearings (4a to 4g) are provided, two of them being arranged at both ends of said roll and one in the middle thereof, and that the spacing between the outer roller bearings (4a and 4g) and the roller bearings (4b, 4f) closest to them is larger than the spacing between the remaining roller bearings (4c, 4d, 4e).

10. The use of as roll a claimed in one of claims 1 to 9 in a machine for producing webs of synthetic materials, comprising a rotating cooling cylinder, a pressure roll the diameter of which is considerably smaller than that of said cooling cylinder, and a supporting roll arranged parallel to the longitudinal axis of said pressure roll and contacting the latter along a generating line, characterized in that said cupporting roll (22) is formed as a controlled-deflection roll as claimed in one of claims 1 to 9.

**Revendications**

1. Cylindre à flèche réglable, notamment pour machines de fabrication et de traitement de bandes de papier ou de matière plastique, comprenant une partie intérieure sensiblement cylindrique et une partie extérieure tubulaire qui s'étend sur une partie de la longueur de la partie intérieure, entoure cette dernière et est tourillonnée à ses deux extrémites sur la partie intérieure pour tourner autour de l'axe du cylindre, et dans lequel il est prévu sur la partie intérieure, le long d'une génératrice, un dispositif destiné à produire des forces de contrainte qui agissent entre la partie intérieure et la partie extérieure dans une direction radiale, ce cylindre étant caractérisé en ce que, sur la partie intérieure (1), est disposée au moins une bande chauffante (6a à 6f) pouvant être raccordée à un circuit de chauffage électrique (15), qui s'étend au moins sur une partie de la longueur de la partie intérieure (1) et sur une région prédéterminée de la circonférence qui est inférieure à 180°, en ce que, dans la partie intérieure (1) sont disposés au moins deux capteurs de température électriques (7a à 7c; 8a à 8c) dont au moins un premier capteur de température (7a à 7c) à proximité immédiate d'une bande chauffante et au moins un deuxième capteur de température (8a à 8c) contre un côté de la partie intérieure qui est à l'opposé de la bande chauffante ou des bandes chauffantes, considéré dans la direction circonférentielle de la partie intérieure (1) et en ce que les premiers et deuxièmes capteurs de température (7a à 7c et, respectivement, 8a à 8c), sont connectés par paires, chaque paire à un dispositif (17) de mesure de la différence de température et qu'il est prévu au moins un circuit de régulation électrique (14) auquel sont connectés le dispositif (17) de mesure de la différence de température ou des différences de température, ainsi que le circuit de chauffage (15) ou les circuits de chauffage, et qui règle le chauffage de la bande chauffante ou des bandes chauffantes (6a à 6f) de manière à maintenir une différence de température prédéterminée ou des différences de température prédéterminées entre le côté chauffé et le côté non chauffé de la partie intérieure (1).

2. Cylindre suivant la revendication 1, caractérisé en ce qu'un dispositif de refroidissement (11) est disposé dans la partie intérieure (1) sur le côté qui est à l'opposé de la bande chauffante ou des bandes chauffantes (6a à 6f).

3. Cylindre suivant la revendication 2, caractérisé en ce que le dispositif de refroidissement comprend au moins un canal de refroidissement (11) ménagé dans la partie intérieure (1) et qui est raccordé à un circuit de milieu de refroidissement.

4. Cylindre suivant la revendication 3, caractérisé en ce qu'il est prévu plusieurs canaux de refroidissement (11) qui s'étendent dans la direction longitudinale, qui sont connectés en série par paires, de manière que l'entrée de milieu de refroidissement (KE) et la sortie de milieu de refroidissement (KA) se trouvent à la même extrémité du cylindre.

5. Cylindre suivant l'une des revendications 2 à 4, caractérisé en ce que, dans la partie intérieure (1) est agencé, à proximité du dispositif de refroidissement ou des canaux de refroidissement (11), un capteur de température électrique supplémentaire (9) qui est relié à un circuit de régulation supplémentaire (16), lequel règle l'arrivée de milieu de refroidissement en fonction d'une température prédéterminée.

6. Cylindre suivant l'une des revendications 1 à 5, caractérisé en ce que la partie extérieure (3) prend appui sur la partie intérieure (1) par l'intermédiaire de plusieurs roulements à rouleaux (4a à 4g) et en ce que, dans chaque intervalle entre deux roulements à rouleaux, est agencée une bande chauffante (6a à 6f), les deux bandes chauffantes d'une paire de bandes chauffantes voisines formant une zone de chauffage (Z1 à Z3) étant connectées à un circuit de chauffage commun (15) et étant associées à un premier capteur de température commun et à un deuxième capteur de température commun, un circuit de régulation électrique propre étant associé à chaque zone de chauffage (Z1 à Z3).

7. Cylindre suivant l'une des revendications 1 à 6, caractérisé en ce que la partie extérieure (3) est maintenue sur la partie intérieure (1) à une extrémité par l'intermédiaire d'un palier axial (5a).

8. Cylindre suivant l'une des revendications 1 à 7, caractérisé en ce qu'aux extrémités du cylindre des joints a labyrinthe (13a, 13b) sont disposés entre la partie extérieure (3) et la partie entérieure (1).

9. Cylindre suivant l'une des revendications 6 à 8, caractérisé en ce qu'il est prévu au moins cinq roulements à rouleaux (4a à 4g) dont deux sont disposés aux deux extrémités et un au milieu du cylindre, la distance séparant les deux roulements à rouleaux extérieurs (4a et 4g) des roulements à rouleaux (4b, 4f) qui en sont respectivement les plus rapprochés étant plus grande que la distance séparant les autres roulements à rouleaux (4c, 4d, 4e) les uns des autres.

10. Application d'un cylindre suivant l'une des revendications 1 a 9 à un dispositif de fabrication de feuilles de matière plastique comprenant un cylindre de refroidissement tournant, un cylindre de pressage dont le diamètre est beaucoup plus petit que le diamètre du cylindre de refroidissement, un cylindre d'appui disposé parallèlement à l'axe longitudinal du cylindre de pressage, qui touche le cylindre de pressage le long d'une génératrice, caractérisée en ce que le cylindre d'appui (22) est réalisé sous la forme d'un cylindre à flèche réglable suivant l'une des revendications 1 à 9.

FIG.2

FIG.3